# NEUE EUROPÄISCHE PATENTSCHRIFT

(11) **EP 1 031 263 B2**
(45) Veröffentlichungstag und Bekanntmachung des Hinweises auf die Entscheidung über den Einspruch: **24.08.2011**
(45) Hinweis auf die Patenterteilung: 26.12.2007
(21) Anmeldenummer: 00104017.9
(22) Anmeldetag: 25.02.2000
(51) Int. Cl.: A01B 63/00, A01F 15/08

(54) **Vorrichtung und Verfahren zur Eingabe von Arbeitsparametern an landwirtschaftlichen Maschinen**
Device and method for input of operational parameters in agricultural machines
Dispositif et procédé pour entrer des paramètres opérationnels à des machines agricoles

(30) Priorität: 26.02.1999 DE 19908398
(43) Veröffentlichungstag der Anmeldung: 30.08.2000
(73) Patentinhaber: Usines Claas France, 57140 St. Remy/Woippy (FR)
(72) Erfinder: Mesmer, Dennis, 57320 Bouzonville (FR)
(74) Vertreter: Kus, Sascha

(56) Entgegenhaltungen:
- EP-A- 0 812 530
- EP-A2- 1 004 230
- DE-A1- 19 514 223
- DE-A1- 19 619 419
- DE-A1- 19 705 842
- JP-A- 06 101 970
- US-A- 4 602 560
- US-A- 4 630 191
- US-A- 5 557 510

## Beschreibung

Die Erfindung bezieht sich auf ein Verfahren und eine Vorrichtung zur Eingabe von Arbeitsparametem in eine Steuer- beziehungsweise Regeleinheit an landwirtschaftlichen Maschinen, wobei die Steuer- und Regeleinheit mit mindestens einem Aktor und mindestens einem Sensor in der landwirtschaftlichen Maschine in Verbindung steht.

In der heutigen Landtechnik ist es bekannt, elektrische Steuerungen und Regelungen zur besseren Funktion von landwirtschaftlichen Maschinen zu benutzten. Der Bediener der Maschine erhält dadurch die Möglichkeit den Arbeitsvorgang zu überwachen oder auch an unterschiedliche Arbeitsbedingungen anzupassen. Es ist vielfach notwendig, daß bestimmte Arbeitsparameter vor beziehungsweise während der Benutzung der Maschine eingestellt werden müssen. Dafür sind allgemein verschiedene Einstellmöglichkeiten aus dem Stand der Technik bekannt. Dabei muß man zwischen festen Einstellungen und variablen Einstellungen unterscheiden. Feste Einstellungen von Arbeitsparameter können schon bei der Herstellung der Steuer- und Regeleinheit implementiert oder durch eine werksseitige Einstellung voreingestellt werden. Variable Einstellungen können durch Bedienelemente, Bedieneinheiten oder Bedienterminals einsatzabhängig oder verwendungsabhängig vorgenommen werden.
Die Bedieneinheit kann Bestandteil der Steuer- und Regeleinheit sein. Die Eingabe von Arbeitsparameter wird direkt mittels der Bedieneinheit eingegeben und dann in der Steuer- und Regeleinheit gespeichert. Vielfach befinden sich die Bedien-, Steuer- und Regeleinheiten in der Fahrerkabine der Landmaschine und stehen mittels einer Kommunikationsverbindung mit der landwirtschaftlichen Arbeitsmaschine zur Einstellung und Überwachung der Arbeitsparametern in Verbindung. Bei einem Ausfall der Kommunikationsverbindung zwischen beispielsweise einer Zugmaschine und einer angehängten landwirtschaftlichen Ballenpresse, ist dann ein weiterarbeiten nicht möglich.
Bei neueren Landmaschinen wird zunehmend die Bedieneinheit und die Steuer- und Regeleinheit getrennt und an unterschiedlichen Stellen an beziehungsweise in der Landmaschine angebracht. Die Bedieneinheit wird dann als einfaches Bedienterminal in der Maschinenbedienemähe und die Steuer- und Regeleinheiten in der Nähe der Arbeitsmaschine angebracht. Einstellungen von Arbeitsparameter werden über das Bedienterminal eingegeben und in der Steuer- und Regeleinheit in der landwirtschaftlichen Maschine abgespeichert. Für die Kommunikation zwischen den einzelnen Steuer- und Regeleinheiten sowie der Bedieneinheit werden zunehmend Feldbussysteme verwendet. Bei einer Störung der Kommunikation zwischen dem Bedienterminal und den Steuer- und Regeleinheiten ist vielfach ein weiterarbeiten nur bedingt möglich, zumindest wird dann eine Veränderung der Einstellungen der Arbeitsparameter unmöglich.
An und für sich sind die bekannten Kommunikationseinrichtungen so weit entwickelt, daß die Funktion und Einsatzsicherheit der Elektronik in einer mobilen Anwendung ausreichen. Trotzdem kann es zu Funktionsstörungen kommen, beispielsweise durch Kabelbruch oder -beschädigung, Kurzschluß, Steckerfehler und ähnlichen Ursachen. Wenn ein solcher Fehler in der Kommunikation zwischen dem Bedienterminal und der Steuer- und Regeleinheit auftritt, kann die Steuer- und Regeleinheit nicht mehr auf bestimmte Arbeitsparameter eingestellt werden. Dies kann beispielsweise zu einem Totalausfall der Landmaschine führen, wenn die Landmaschine während des Betriebs laufend an die sich ändernden Betriebsbedingungen angepaßt werden muß. Ein solcher Fehler kann insbesondere bei angehängten Geräten auftreten, bei welchen die Kommunikationsstrecke zwischen dem Zugfahrzeug, auf dem sich das Bedienterminal befindet, und dem angehängten Gerät über lange Kabel und Stecker hergestellt werden muß. Kabel und Stecker können leicht beschädigt oder verschmutzt werden. Vielfach muß der Benutzer einer solchen Maschinen warten, bis der Fehler repariert ist, und erleidet in der Zwischenzeit Verluste durch einen Arbeitsausfall der kompletten Arbeitseinheit.

In der DE 44 42 479 A1 wird beispielsweise ein Überwachungs- und Steuersystem für eine Ballenpresse offenbart. In der Fahrerkabine der Zugmaschine ist eine Eingabevorrichtung angebracht, mittels welcher beispielsweise vorgegeben werden kann, wie hoch der Pressdruck oder wie lang die Länge des Ballens sein soll. Die Eingabevorrichtung sendet die eingegeben Vorgaben des Fahrzeugbedieners an ein in der Ballenpresse angebrachtes Gerätemodul. Das Gerätemodul in der Ballenpresse ist mit Erfassungsmitteln zur Überwachung der Einstellung der Arbeitsparametern der Ballenpresse verbunden und steuert beziehungsweise regelt die Arbeitsweise der Ballenpresse selbstständig so, dass die von dem Fahrzeugbediener eingegebenen Vorgaben erreicht werden. Wird die Kommunikation zwischen der Eingabeeinrichtung und dem Gerätemodul gestört, können die Arbeitsparameter der Ballenpresse nicht mehr verändert werden und ein Weiterarbeiten mit einer optimalen Einstellung in nur bedingt oder auch bei veränderten Erntebedingungen nicht mehr möglich.

Es ist daher Aufgabe der vorliegenden Erfindung, eine Vorrichtung und ein Verfahren zu schaffen, die die Eingabe von Arbeitsparametern in die Steuer- beziehungsweise Regeleinheit der Landmaschine auch bei einem Defekt der normalen Einstellmöglichkeit gestattet.

Die Aufgabe wird durch ein erfindungsgemäßes Verfahren gelöst, indem die Eingabe von Arbeitsparametem in die Steuer- beziehungsweise Regeleinheit der Landmaschine in einem Not-Betriebsmodus erfolgt, wobei eine Umschaltung in den Not-Betriebsmodus dann erfolgt, wenn die Kommunikation zwischen einem Bedienterminal und der Steuer- und Regeleinheit gestört ist. Ferner stellt eine erfindungsgemäße Vorrichtung nach Anspruch 7 eine Lösung der Aufgabe dar.
Durch diese Lösung ist es vorteilhaft möglich, während verschiedener Maschinenzustände eine Eingabe von Arbeitsparametern zur Einstellung der Landmaschine durchführen zu können.
Ein Wechsel in den Not-Betriebsmodi kann erfindungsgemäß über die Erkennung von bestimmten Kombinationen von Stellgliedern beziehungsweise Sensor- und Aktorsignale an der Maschine erfolgen. Ferner besteht die Möglichkeit der Umschaltung von einem Normal-Betriebsmodus in den Not-Betriebsmodus durch eine handbetätigte Veränderung eines Sensorwertes, der von einer Steuer- und Regeleinheit erfasst wird. Beispielsweise erkennt die Steuer- beziehungsweise einer Ballenpresse, bei abgeschaltetem Antrieb der Presseinrichtung, eine Drehung des Ballenlängenmessrades als Signal.
Besonders vorteilhaft hat sich die automatische Erkennung des Not- Betriebsmodi über ein aktives Schaltelement wie beispielsweise einen Handschalter erwiesen. Der Schalter kann manuell oder auch ferngesteuert mittels einer entsprechenden Elektronik bestätigt werden. Bei einer Umschaltung in Not-Betriebsmodus sorgt der ausgewählte Modus dafür, dass die Steuer- und Regeleinheit auch ohne die Eingabe oder Vorgabe von Arbeitsparametern von einem Bedienterminal, Arbeitsfunktionen der Landmaschine steuern und regeln und/oder die Einstellung von Arbeitsparametern verändert werden kann.
Dies geschieht bevorzugt in der Weise, dass im Not-Betriebsmodus ohne Bedieneinheit die Eingabe von Arbeitsparametern mittels eines Sensors, welcher im normalen Betriebsmodus zur Überwachung von Arbeitsparametern dient, eingelesen wird. Um die Landmaschine auf neue Arbeitsparameter einstellen zu können, wird vorgeschlagen, trotz fehlender Eingabemöglichkeit beziehungsweise Vorgabe von Sollwerten durch ein Bedienterminal, über eine manuelle Veränderung eines Sensorwertes, einen neuen Arbeitsparameter an die Steuer- und Regeleinheit zu übermitteln. Damit nun die Steuer- beziehungsweise Regeleinheit den neuen Parameter als solchen erkennen kann, wird der Not-Betriebsmodus auf einer der oben beschriebenen Weise eingeschaltet und danach ein entsprechender Sensorwert verändert. Ist es erforderlich mehrere Parameter einzustellen, so ist diese über eine in einer Anleitung angegebenen Reihenfolge möglich. In der Anleitung kann weiterhin auch die Zuordnung der notwendigen Sensorveränderung zu der entsprechend gewünschten Einstellung angegeben werden. An dem Sensor, zur Eingabe von Arbeitsparametern, kann ferner eine Skala für die jeweiligen Eingaben angebracht sein.
Das Einstellverfahren wird hier beispielsweise für die Einstellung der Ballenlänge an einer Ballenpresse angegeben. Der Maschinenbediener schaltet den Antriebsstrang (Zapfwelle) der Ballenpresse ab und wählt dann den Einstell- Modus durch umlegen eines Schalters aus. Die Steuer- beziehungsweise Regeleinheit ist nun zur Eingabe des Arbeitsparameters vorbereitet. Der Maschinenbediener dreht jetzt das Ballenlängemessrad in vorgesehener Richtung mit einer entsprechenden Anzahl von Umdrehungen, beispielsweise 2 Umdrehungen je gewünschter Meter an Ballenlänge. Anschließend schaltete er den Schalter wieder in den Normal- Betriebsmodus und kann dann mit der neuen Einstellung weiterarbeiten.

Sind mehrere veränderbare Parameter vorhanden, so ist es vorgesehen durch Deaktivierung des jeweiligen Stellgliedes (Aktors), eine Zuordnung des Einstellwertes zu dem jeweiligen Parameter zu erreichen. An einer Ballenpresse kann dieses durch die Trennung (abziehen des Steckers an dem entsprechenden Magnet) der Verbindung des Magnetventils für die Bindeauslösung beziehungsweise durch das Trennen der Verbindung zu den Einstellventilen für den Pressdruck erreicht werden. Die Trennung wird von der Steuer- beziehungsweise Regeleinheit in bekannter Weise erkannt und die anschließende Sensorwertänderung entsprechend registriert.

Prinzipiell hängt die Auswahl des Betriebsmodi, von der Ausstattung der landwirtschaftlichen Maschine ab. Das Verfahren zur Eingabe von Arbeitsparametern ist identisch. Der Not- Betriebsmodus ist für die landwirtschaftliche Maschine vorgesehen, die im Normalbetrieb mit einer Bedieneinheit in Verbindung steht. Diese können dann erfindungsgemäß in den Not- Betriebsmodus nach dem erfindungsgemäßen Verfahren eingestellt und dann in diesem Modus die normale Arbeit ausführen. .

Die Erfindung soll nachfolgend anhand eines Ausführungsbeispiels näher erläutert werden.
Es zeigen:

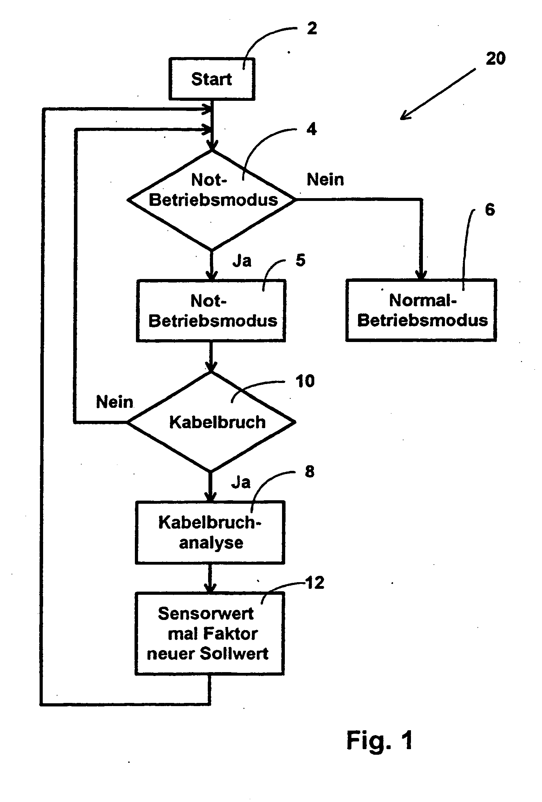

- Figur 1: eine vereinfachte Programmschleife für die Erkennung und Eingabe eines Arbeitsparameters im Not- Betriebsmodus,
- Figur 2: einen schematischen Aufbau der Vorrichtung mit Bedienterminal,
- Figur 3: einen schematischen Aufbau einer Vorrichtung ohne Bedienterminal.

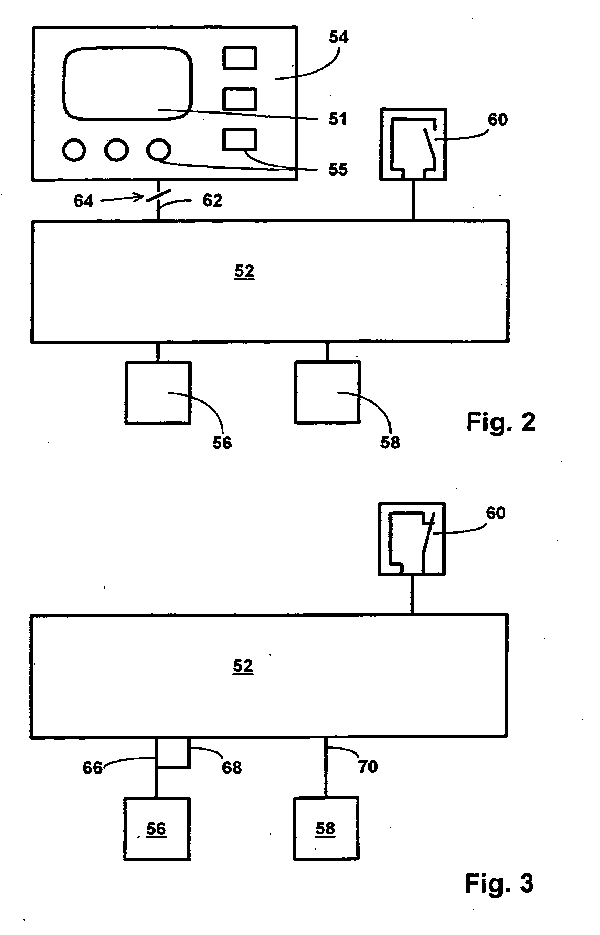

Es sei darauf hingewiesen, dass Fig. 3 kein erfindungsgemäßes Ausführungsbeispiel darstellt.

Die dargestellte vereinfachte Programmschleife 20 beschreibt das erfindungsgemäße Verfahren in allgemeiner Form. Die Software wird in Punkt 2 gestartet und überprüft zuerst den Betriebszustand der Maschine. Danach wird in dem Entscheidungspunkt 4 ermittelt, ob beispielsweise der Not- Betriebsmodus 5 vorliegt. Wenn beispielsweise der Schalter für den Not- Betriebsmodus 5 nicht geschaltet wurde, wird die Funktion der Steuer- und Regeleinheit der Landmaschine im Normal- Betriebsmodus 6 fortgesetzt. Sollte ein Not- Betriebsmodus 5 erkannt werden, werden anschließend die Aktorkabel auf einen Kabelbruch hin untersucht. Dies kann beispielsweise dadurch geschehen, indem die Spannung des Leistungsausgangs der Steuer- und Regeleinheit abgefragt und in Abhängigkeit des Schaltzustandes des Leistungsausganges mit einer entsprechenden Vergleichsspannung verglichen wird. Dadurch kann dann erkannt werden, ob eine Verbindung zu einem Aktor unterbrochen ist. Wenn keine Unterbrechung erkannt werden, dann springt das Programm an den Anfang des Programmes zurück und beginnt wieder bei der Abfrage des Betriebsmodi. Sollte jedoch eine Unterbrechung erkannt worden sein, dann wird eine Kabelbruchanalyse 8 durchgeführt, bei welcher untersucht wird, welcher Aktor von der Steuer- und Regeleinheit getrennt ist. Nun wird unter Punkt 12 die Einstellsensorveränderung ermittelt, mit einem Faktor für den entsprechenden Parameter multipliziert und als neuer Sollwert in einen Speicher abgespeichert. Anschließend beginnt das Programm erneut mit der Abfrage des Betriebsmodi.
Die Programmschleife 20 sei hier nur vereinfacht dargestellt, sie kann für viele Anwendungen des Verfahrens in Landmaschinen eingesetzt oder bei Bedarf von einem Fachmann an die jeweiligen Bedürfnissen angepaßt werden.

Figur 2 zeigt einen einfachen Aufbau einer Vorrichtung an einer landwirtschaftlichen Maschine, welcher aus einer Steuer- und Regeleinheit 52, einem Bedienterminal 54, einem Aktor 56 und einem Sensor 58 besteht. Das Bedienterminal 54 kann in der Kabine eines Traktors, eines Mähdreschers oder einer sonstigen beliebigen selbstfahrenden Landmaschine angeordnet sein. Es ist ferner mit Einstellmittel 55 für den Normalbetrieb der Maschine und einem Anzeigeelement 51 ausgestattet. Die Steuer- und Regeleinheit 52 befindet sich auf einer an einen Traktor angehängten gezogenen Arbeitsmaschine beispielsweise einer Ballenpresse, einem Düngerstreuer, einer Sämaschine oder einem ähnlichen Arbeitsgerät. Wenn die Landmaschine eine selbstfahrende Arbeitsmaschine ist, kann sich die Steuer- und Regeleinheit 52 auf diesem befinden. Weiter ist die Steuer- und Regeleinheit 52 mit einem Schalter 60 verbunden. Die Verbindungen der Steuer- und Regeleinheit 52 mit den angeschlossenen Aktoren 56 beziehungsweise Sensoren 58 und die Verbindung derselben mit dem Bedienterminal 54 kann über einen Feldbussystem 62 beispielsweise dem CAN-Bus bestehen. Wenn das Bussystem 62 an einer Stelle 64 beispielsweise durch einen Kabelbruch unterbrochen ist, können zwischen dem Bedienterminal 54 und der Steuer- und Regeleinheit 52 keine Informationen mehr ausgetauscht werden.

Allgemein kann der Bediener oder eine Fehlerdiagnosesoftware, den Schalter 60 betätigen, um den Not- Betriebsmodus in der Landmaschine auszulösen. Durch den Not- Betriebsmodus wird die Landmaschine trotz eines Fehlerzustandes in der Verbindung zu dem Bedienterminal 54 in die Lage versetzt, auf der Basis der aktuellen Einstellungen weiterzuarbeiten. Dadurch wird ein Totalausfall der Landmaschine vermieden. Die Umschaltung des Schalters 60 bei einem Feldbusfehler ist bei einer entsprechenden Busabschlußbeschaltung nicht notwendig. Mit der landwirtschaftliche Erntemaschine kann man dann auch bei einer Unterbrechung der Verbindung zu dem Bedienterminal 54 weiterarbeiten, jedoch sind Veränderungen der Einstellungen der Arbeitsparameter nicht mehr möglich und der Arbeitsprozess muß dann abgebrochen werden, wenn eine Veränderung der Einstellung unabdingbar ist. Hier liegt der besondere Vorteil der Erfindung, da durch sie Korrekturen der Einstellungen auch bei defekter Busverbindung oder bei defektem Bedienterminal 54 vorgenommen werden können.

In Figur 3 wird ein einfacher Aufbau der Vorrichtung ohne Bedienterminal gezeigt. Die Vorgabe neuer Sollwerte/ Parameter für eine Einstellung soll nun beispielhaft anhand einer Ballenpresse erläutert werden. Der Schalter 60 ist hier eingeschaltet. Dies kann durch einen Bediener oder eine Fehlerdiagnoseautomatik verursacht worden sein. Ferner kann dies auch für die Erkennung des Einstell- Modus an einer Ballenpresse sein, wenn die Ballenpresse nicht mit einem Bedienterminal ausgestattet werden soll. Es wird nun angenommen, daß ein neuer hydraulisch erzeugter Preßdruck im Ballenkanal eingestellt werden soll.
Eine manuelle Veränderung des Preßdruckes ist prinzipiell bei funktionstüchtiger Steuer- und Regeleinheit 52 nicht möglich. Die Steuer- und Regeleinheit 52 an einer Ballenpresse würde die erzeugte Differenz, durch beispielsweise eine Handbetätigung eines Hydraulikventils, bei der üblichen Regelgeschwindigkeit heutiger elektrohydraulischer Systeme sofort wieder auf den vorherigen Solldruck regeln. Um nun diese Regelung zur Einstellung eines neuen Sollwerts zu veranlassen, werden die, für den Preßdruck zuständigen Hydraulikventilmagnete (Aktoren 56), von der Steuer- und Regeleinheit 52 getrennt. Das ventilseitige Ende der Leitung 66 wird durch das Lösen der Steckverbindung von den Elektromagenten der Hydraulikventilen getrennt. Das Ende der Leitung 66, welches mit der Steuer- und Regeleinheit 52 in Verbindung steht, wird über die Verbindung 68 auf einen Meßeingang der Steuer- und Regeleinheit 52 geführt. Der Ausgang der Steuer- und Regeleinheit 52, für die Ansteuerung des jeweiligen Magnetventils, ist so beschaltet, daß er sich immer auf einer definierten Spannung befindet. Das Abtrennen des Aktor 56 von der Steuer- und Regeleinheit 52 bedeutet also, daß sich der Spannungspegel ändert. Dieses wird von der Steuer- und Regeleinheit 52 erkannt und in Verbindung mit dem Schalter 60 als Signal zum Aufrufen des Einstell- Betriebsmodi oder als Not- Betriebsmodus ausgewertet. Dabei ist die automatische Preßdruckregelung deaktiviert. Der Preßdruck im Ballenkanal kann dann, durch eine Handbetätigung der Hydraulikventile verändert werden. Zur Ermittlung des neuen Parameters gibt es mehrere Möglichkeiten. Als Erstes sei die zuvorgenannte Handbetätigung genannt. Dabei wird der Preßdruck von der Steuer- und Regeleinheit über den Preßdrucksensor erkannt. Anhand der Anzeige des Druckes auf einem Manometer kann der Maschinenbediener den Preßdruck einstellen und bei der Einstellung überwachen. Der zweite Weg ist die Vorgabe des neuen Arbeitsparameters über den Sensor für die Ballenlängenmessung mittels einer handbetätigten Drehung des Ballenlängemeßrades. Hierzu muß eine entsprechende Zuordnung des Sensormeßwertes und des gewünschten Preßdruckes vom Bediener und der Steuer- und Regeleinheit 52 vorbekannt sein.
Nachdem der Wert eingegeben worden ist wird die Leitung 66 wieder mit dem Aktor 56 verbunden. Die Steuer- und Regeleinheit 52 erhält über die Verbindung 68 ein entsprechendes Signal. Dieses Signal löst die Übernahme des neuen Parameters in einen Speicher der Steuer- und Regeleinheit 52 aus. Für die Regelung des Preßdruckes wird nach erfolgter Einstellung, der neue Sollwert bei den weiteren Regelprozessen zugrundegelegt. Nach dem umlegen des Schalters 60 verläßt dann die Steuer und Regeleinheit 52 den Einstell- Modus und der normale Arbeitsbetrieb mit einem neuen Arbeitsparameter für den Preßdruck kann gestartet werden.

In einem weiteren Beispiel wird die Veränderung der Einstellung der Ballenlänge in einer Ballenpresse im Not- Betriebsmodus (Schalter 60 geschlossen) anhand von Figur 3 erläutert. Eine Garnbindung wird im normalen Betrieb der Ballenpresse durch einen elektrischen Aktor 56 ausgelöst. Zur Einstellung der neuen Ballenlänge wird nun die Leitung 66, die den Aktor 56 mit der Steuer- und Regeleinheit 52 verbindet, von der Steuer- und Regeleinheit 52 getrennt. Die Leitungstrennung wird über die Verbindung 68 von der Steuer- und Regeleinheit 52 erkannt und entsprechend als Befehl zur Auslösung des Einstell- Betriebsmodi ausgewertet. Nun wird das Ballenlängenmeßrad, welches im Normalfall mittels eines Drehsensors 58, welcher über die Leitung 70 mit der Steuer- und Regeleinheit 52 in Verbindung steht, die Länge des bisher gebildeten Ballens ermittelt, so lange manuell gedreht, bis der Sensor 58 die neue gewünschte Ballenlänge aufgenommen hat, beispielsweise entsprechen 2 manuelle Umdrehungen einer gewünschten Ballenlänge von 1 m. Sodann wird die Leitung 66 wieder mit dem Aktor 56 in Verbindung gebracht. Dies bewirkt wiederum eine Eingangssignaländerung, welche von der Steuer- und Regeleinheit 52 über die Verbindung 68 erkannt wird.

Für den weiteren Arbeitsprozeß, wird von der Steuer- und Regeleinheit 52 der neue Sollwert für die folgenden Garnbindeauslösungen, nach einem Verlassen des Einstell- Betriebsmodi, zugrundegelegt.

Anhand gleicher oder vom Fachmann ableitbaren Verfahren können Steuer- und Regeleinheiten 52 durch die Auswahl von bestimmten Betriebsmodi in Verbindung eines Trennen und Verbinden der Aktoren 56 von der Steuer- und Regeleinheit 52 und einer manuellen Vorgabe durch vorhandene Sensoren, auf neue Arbeitsparameter eingestellt werden.

## Patentansprüche

1. Verfahren zur Eingabe von Arbeitsparametern in eine Steuerbeziehungsweise Regeleinheit (52) an landwirtschaftlichen Maschinen, wobei die Steuer- und Regeleinheit (52) mit mindestens einem Aktor (56) und mindestens einem Sensor (58) in der landwirtschaftlichen Maschine in Verbindung steht, **dadurch gekennzeichnet, dass** die Eingabe von Arbeitsparametern in einem Not-Betriebsmodus (5) erfolgen kann, wobei eine Umschaltung in den Not-Betriebsmodus (5) dann erfolgt, wenn die Kommunikation zwischen einem Bedienterminal (54) und der Steuer- und Regeleinheit (52) gestört ist.

2. Verfahren nach Anspruch 1,
**dadurch gekennzeichnet,**
**dass** die Auswahl des Not- Betriebsmodus (5) automatisch beziehungsweise in Abhängigkeit eines Stellgliedes (55) erfolgt.

3. Verfahren nach mindestens einem der Ansprüche 1 oder 2,
**dadurch gekennzeichnet,**
**dass** die Auswahl des Not- Betriebsmodus (5) in Abhängigkeit von der Stellung eines Schalters (60) erfolgt.

4. Verfahren nach mindestens einem der Ansprüche 1 bis 3,
**dadurch gekennzeichnet,**
**dass** die Eingabe mindestens eines Arbeitsparameters, wie beispielsweise die Vorgabe der Ballenlänge, mittels eines Sensors (58) erfolgt, der im Normal-Betriebsmodus (6) einen Arbeitsparameter überwacht.

5. Verfahren nach mindestens einem der Ansprüche 1 bis 4,
**dadurch gekennzeichnet,**
**dass** die Eingabe mindestens eines Arbeitsparameters mittels des Sensors (58) erfolgt, welcher den ermittelten Arbeitsparameter auch überwacht.

6. Verfahren nach mindestes einem der Ansprüche 1 bis 5,
**dadurch gekennzeichnet,**
**dass** die Eingabe eines Arbeitsparameters in einem Not- Betriebsmodus (5) durch folgende Schritte erfolgt:
- Trennen des Aktors (56) von der Steuer- und Regeleinheit (52),
- Verändern eines Sensorwertes und anschließendes
- Verbinden des Aktors (56) mit der Steuer- und Regeleinheit (52).

7. Landwirtschaftliche Maschine mit einer Vorrichtung zur Eingabe von Arbeitsparametern in eine Steuer- beziehungsweise Regeleinheit (52), wobei die Steuer- beziehungsweise Regeleinheit (52) mit mindestens einem Aktor (56) und mindestens einem Sensor (58) in der landwirtschaftlichen Maschine in Verbindung steht,
**dadurch gekennzeichnet, dass** die Vorrichtung Mittel zur Auswahl eines Notbetriebsmodus (5) aufweist und in dem Notbetriebsmodus (5) die Eingabe von Arbeitsparametern erfolgen kann, wobei im Not-Betriebsmodus (5) die Kommunikation zwischen einem Bedienterminal (54) und der Steuer- und Regeleinheit (52) gestört ist.

8. Landwirtschaftliche Maschine nach Anspruch 7,
**dadurch gekennzeichnet,**
**dass** die Steuer- und Regeleinheit (52) mit einem Schalter (60) zur Auswahl des Not- Betriebsmodus (5) in Verbindung steht.

9. Landwirtschaftliche Maschine nach mindestens einem der Ansprüche 7 oder 8,
**dadurch gekennzeichnet,**
**dass** die Steuer- und Regeleinheit (52) über Mittel zur Erkennung des Zustandes der Verbindung zu dem jeweiligen Aktor (56) verfügt.

## Claims

1. A method of inputting working parameters into a control or regulating unit (52) on agricultural machines, wherein the control and regulating unit (52) is connected to at least one actuator (56) and at least one sensor (58) in the agricultural machine, **characterised in that** the input of working parameters can be effected in an emergency operating mode (5), wherein switching over into the emergency operating mode (5) is effected when the communication between an operating terminal (54) and the control and regulating unit (52) is disturbed.

2. A method according to claim 1 **characterised in that** selection of the emergency operating mode (5) is effected automatically or in dependence on a setting member (55) respectively.

3. A method according to at least one of claims 1 and 2 **characterised in that** selection of the emergency operating mode (5) is effected in dependence on the position of a switch (60).

4. A method according to at least one of claims 1 to 3 **characterised in that** the input of at least one working parameter such as for example the presetting of the bale length is effected by means of a sensor (58) which monitors a working parameter in the normal operating mode (6).

5. A method according to at least one of claims 1 to 4 **characterised in that** the input of at least one working parameter is effected by means of the sensor (58) which also monitors the ascertained working parameter.

6. A method according to at least one of claims 1 to 5 **characterised in that** the input of a working parameter is effected in an emergency operating mode (5) by the following steps:
- separating the actuator (56) from the control and regulating unit (52),
- altering a sensor value, and then
- connecting the actuator (56) to the control and regulating unit (52).

7. An agricultural machine having a device for inputting working parameters into a control or regulating unit (52), wherein the control and regulating unit (52) is connected to at least one actuator (56) and at least one sensor (58) in the agricultural machine, **characterised in that** the device has means for selection of an emergency operating mode (5) and the input of working parameters can be effected in the emergency operating mode, wherein in the emergency operating mode (5) the communication between an operating terminal (54) and the control and regulating unit (52) is disturbed.

8. An agricultural machine according to claim 7 **characterised in that** the control and regulating unit (52) is connected to a switch (60) for selection of the emergency operating mode (5).

9. An agricultural machine according to at least one of claims 7 and 8 **characterised in that** the control and regulating unit (52) has means for detecting the condition of the connection to the respective actuator (56).

## Revendications

1. Procédé de saisie de paramètres de travail dans une unité de commande ou de régulation (52) de machines agricoles, l'unité de commande et de régulation (52) étant reliée à au moins un actionneur (56) et au moins un capteur (58) de la machine agricole, **caractérisé en ce que** la saisie de paramètres de travail peut avoir lieu dans un mode de fonctionnement de secours (5), la commutation en mode de fonctionnement de secours (5) intervenant en cas de problème de communication entre un terminal de manoeuvre (54) et l'unité de commande ou de régulation (52).

2. Procédé selon la revendication 1, **caractérisé en ce que** la sélection du mode de fonctionnement de secours (5) s'effectue automatiquement ou en fonction d'un organe de manoeuvre (55).

3. Procédé selon au moins une des revendications 1 ou 2, **caractérisé en ce que** la sélection du mode de fonctionnement de secours (5) s'effectue en fonction de la position d'un commutateur (60).

4. Procédé selon au moins une des revendications 1 à 3, **caractérisé en ce que** la saisie d'au moins un paramètre de travail, par exemple la valeur de consigne pour la longueur d'une balle, s'effectue à l'aide d'un capteur (58) qui surveille un paramètre de travail en mode normal de fonctionnement (6).

5. Procédé selon au moins une des revendications 1 à 4, **caractérisé en ce que** la saisie d'au moins un paramètre de travail s'effectue à l'aide du capteur (58) qui surveille également le paramètre de travail déterminé.

6. Procédé selon au moins une des revendications 1 à 5, **caractérisé en ce que** la saisie d'un paramètre de travail, dans un mode de fonctionnement de secours (5), s'effectue à l'aide des étapes consistant à :
- séparer l'actionneur (56) de l'unité de commande et de régulation (52),
- modifier une valeur du capteur, puis
- relier l'actionneur (56) à l'unité de commande et de régulation (52).

7. Machine agricole avec un dispositif de saisie de paramètres de travail dans une unité de commande ou de régulation (52), l'unité de commande ou de régulation (52) étant reliée à au moins un actionneur (56) et à au moins un capteur (58) dans la machine agricole, **caractérisée en ce que** le dispositif possède un moyen de sélection du mode de fonctionnement de secours (5), **caractérisée en ce que** la saisie de paramètres de travail peut avoir lieu dans un mode de fonctionnement de secours (5), la communication entre un terminal de manoeuvre (54) et l'unité de commande ou de régulation (52) étant perturbée en mode de fonctionnement de secours (5).

8. Machine agricole selon la revendication 7, **caractérisée en ce que** l'unité de commande et de régulation (52) est reliée à un commutateur (60) de sélection du mode de fonctionnement de secours (5).

9. Machine agricole selon au moins une des revendications 7 ou 8, **caractérisée en ce que** l'unité de commande et de régulation (52) dispose de moyens destiné à détecter l'état de la liaison avec les différents actionneurs (56).
